# EUROPEAN PATENT SPECIFICATION

(11) **EP 2 532 512 B1**
(45) Date of publication and mention of the grant of the patent: **14.05.2014**
(21) Application number: 12004301.3
(22) Date of filing: 06.06.2012
(51) Int. Cl.: B29D 30/72

(54) **Pneumatic tire molding method and apparatus.**
Luftreifenformverfahren und Vorrichtung.
Procédé et appareil pour le moulage d'un pneumatique.

(30) Priority: 08.06.2011 JP 2011128218
(43) Date of publication of application: 12.12.2012
(73) Proprietor: The Yokohama Rubber Company, Limited, Tokyo 105-8685 (JP)
(72) Inventor: Takada, Noboru, Hiratsuka City Kanagawa 254-8601 (JP)
(74) Representative: Global IP Europe Patentanwaltskanzlei

(56) References cited:
- EP-A1- 0 943 421
- EP-A2- 0 340 146
- GB-A- 922 396
- JP-A- 2002 307 571
- JP-A- 2004 209 761
- US-A- 3 408 244
- US-A- 5 653 840
- US-A1- 2008 289 744

## Description

### Technical Field

The present invention relates to a pneumatic tire molding method and molding apparatus. More particularly, the present invention relates to a pneumatic tire molding method and molding apparatus with which when a side member is attached to a tire component member set on an external circumferential surface of a rigid inner mold, the side member can be attached with intimate contact while preventing a surface shape of the side member from undergoing deformation.

### Background Art

Various pneumatic tire manufacturing methods have been proposed (e.g., JP2009-149034A) in which a green tire is molded on an external circumferential surface of a rigid inner mold made of metal and the molded green tire is arranged inside a vulcanization mold together with the rigid inner mold and vulcanized. With a manufacturing method using this kind of rigid inner mold, a load acting against the green tire during vulcanizing can be reduced because the green tire has a shape that is close to the shape of the tire resulting after vulcanization.

However, it is necessary to mold the green tire to have substantially the same shape as the tire to be manufactured when the green tire is molded on the rigid inner mold. In particular, it is preferable to attach the side member to a carcass material wrapped onto the external circumferential surface of the rigid inner mold without deforming a preset surface shape of the side member. Additionally, it is important to attach the side member such that it makes intimate contact with the carcass material without trapping air between the side member and the carcass material. Strongly pressing the side member is effective for achieving intimate contact, but this method can be problematic because applying an excessive pressing force can cause the surface shape of the un-vulcanized side member to deform. Thus, with the conventional method, it is difficult to attach a side member to a tire component member set on the external circumferential surface of an inner mold such that intimate contact is achieved while preventing deformation of the surface shape of the side member.

EP 0 943 421 A1 discloses a pneumatic tire molding method for molding a green tire on an external circumference of a circular-cylindrically shaped rigid inner mold whose external circumferential surface has substantially the same shape as a profile of an internal circumferential surface of a tire to be manufactured, comprising arranging an annular recess formed in an annular holder to be side-by-side with an area corresponding to a tire side section of a tire component member that is arranged on the external circumferential surface of the rigid inner mold so as to cover said area; and molding a green tire by attaching remaining tire component members to the tire component member arranged on the external circumferential surface of the rigid inner mold.

Patent application US 2008/0289744 - A1 discloses a method and an apparatus for moulding a tire, wherein a tire sidewall component is held by a suitable holding device using vacuum; thereafter the sidewall component is applied to the toroidally expanded tire carcass using an appropriate pressure.

### SUMMARY OF THE INVENTION

### Technical Problem

An object of the present invention is to provide a pneumatic tire molding method and molding apparatus with which when a side member is attached to a tire component member set on an external circumferential surface of a rigid inner mold, the side member can be attached with intimate contact while preventing a surface shape of the side member from undergoing deformation.

### Solution to Problem

In order to achieve the aforementioned object, a pneumatic tire molding method according to the present invention as defined in claim 1, is a pneumatic tire molding method for molding a green tire on an external circumference of a circular-cylindrically shaped rigid inner mold whose external circumferential surface has substantially the same shape as a profile of an internal circumferential surface of a tire to be manufactured. The method includes a step in which an annular recess formed in an annular holder is arranged side-by-side with and made to cover an area corresponding to a tire side section of a tire component member arranged on an external circumferential surface of the rigid inner mold; a subsequent step in which air is sucked from a space between the recess and the tire component member covered by the recess so as to reduce a pressure in the space, a surface of a side member is held by a holding part having a holding surface with the same shape as the surface of the side member, and the side member is pressed against and attached to the area corresponding to the tire side section under the pressure-reduced state; and a step in which a green tire is molded by attaching remaining tire component members to the tire component member arranged on the external circumferential surface of the rigid inner mold.

A pneumatic tire molding apparatus according to the present invention as defined in claim 4, is a pneumatic tire molding apparatus for molding a green tire on an external circumference of circular-cylindrically shaped rigid inner mold whose external circumferential surface has substantially the same shape as a profile of an internal circumferential surface of a tire to be manufactured. The apparatus comprises an annular holder, a pump, and a holding part. The annular holder can move in directions of approaching toward and separating from an area corresponding to a tire side section of a tire component member arranged on the external circumferential surface of the rigid inner mold, and the annular holder has an annular recess that can cover the area corresponding to the tire side section. The pump is connected to the recess through a suction line that communicates with the recess. The holding part is arranged inside the recess, has a holding surface shaped the same as a surface of the side member, and is configured to hold the surface of the side member with the holding surface.

Preferred embodiments of the invention are defined in the dependent claims.

### EFFECTS OF THE INVENTION

With the present invention, the annular recess formed in the annular holder is arranged side-by-side with and made to cover the area corresponding to the tire side section of the tire component member arranged on the external circumferential surface of the rigid inner mold and air is sucked from a space between the recess and the tire component member covered by the recess so as to reduce the pressure in the space. Thus, the side member can be pressed against and attached to the area corresponding to the tire side section under this pressure-reduced state. Additionally, since the surface of the side member is held by the holding surface having the same shape as the surface of the side member, the side member can be attached with intimate contact to the area corresponding to the tire side section while preventing deformation of the surface shape of the side member.

With a pneumatic tire molding method according to the present invention, when the side member is held by the holding part, the side member can be adhered to the holding surface with suction by sucking air through a suction hole opened in the holding surface. In this way, the side member can be held more reliably by the holding part without deforming the surface shape of the side member.

Within the recess, the holding part can be slid toward the area corresponding to the tire side section using pneumatic pressure such that the side member is pressed against the area corresponding to the tire side section. In this way, the side member can be attached more reliably to the area corresponding to the tire side section with intimate contact without applying excessive pressure against the side member.

A pneumatic tire molding apparatus according to the present invention can be configured to have a suction hole opened in the holding surface and a pump that sucks air through the suction hole. With such a configuration, the side member can be held more reliably by the holding part without deforming the surface shape of the side member.

The apparatus can be configured to have a sliding mechanism that uses pneumatic pressure to slide the holding part within the recess in directions of approaching toward and separating from the area corresponding to the tire side section. With such a configuration, the side member can be attached more reliably to the area corresponding to the tire side section with intimate contact without applying excessive pressure against the side member.

### BRIEF DESCRIPTION OF THE DRAWINGS

Fig. 1 is a vertical sectional view schematically illustrating an entire pneumatic tire molding apparatus according to the present invention.
Fig. 2 is a cross sectional view taken along section line A-A of Fig. 1.
Fig. 3 is an enlarged partial vertical sectional view illustrating a step of holding a side member with a holding part.
Fig. 4 is an enlarged partial vertical sectional view illustrating a step of arranging an annular recess side-by-side with an area corresponding to a tire side section of a tire component member, making the annular recess cover the area, and reducing pressure in a space in-between.
Fig. 5 is an enlarged partial vertical sectional view illustrating a step of pressing the side member against the area corresponding to the tire side section.
Fig. 6 is an enlarged partial vertical sectional view illustrating a step in which the holding part is retracted.
Fig. 7 is an enlarged partial vertical sectional view illustrating a molded green tire.

### DESCRIPTION OF EMBODIMENTS

A pneumatic tire molding method and molding apparatus according to the present invention will now be explained based on embodiments shown in the drawings.

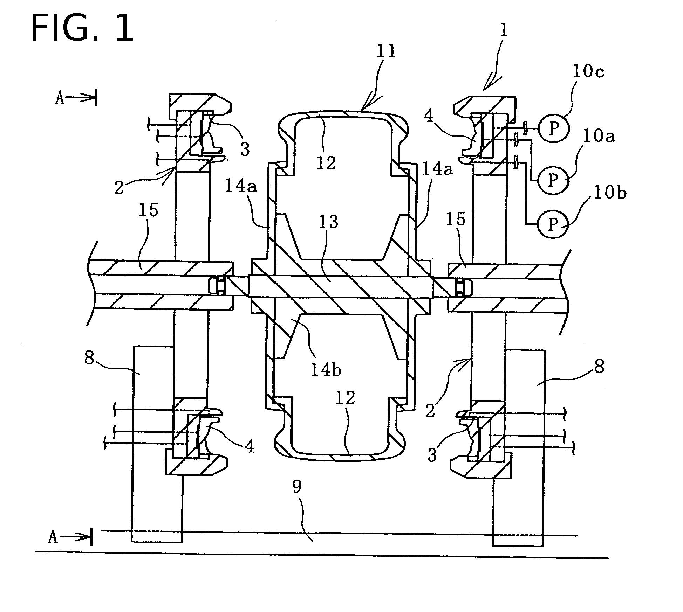

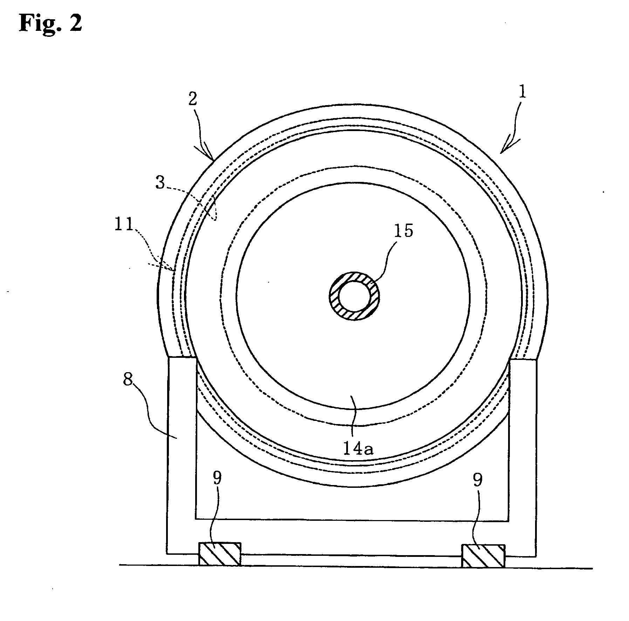

As shown in Fig. 1 and Fig. 2, the pneumatic tire molding apparatus 1 according to the present invention (hereinafter called "molding apparatus 1") is an apparatus used to mold a green tire G on an external circumference of a rigid inner mold 11. Tire component members are successively attached to each other on the exterior circumferential surface of the rigid inner mold 11 to complete the green tire G.

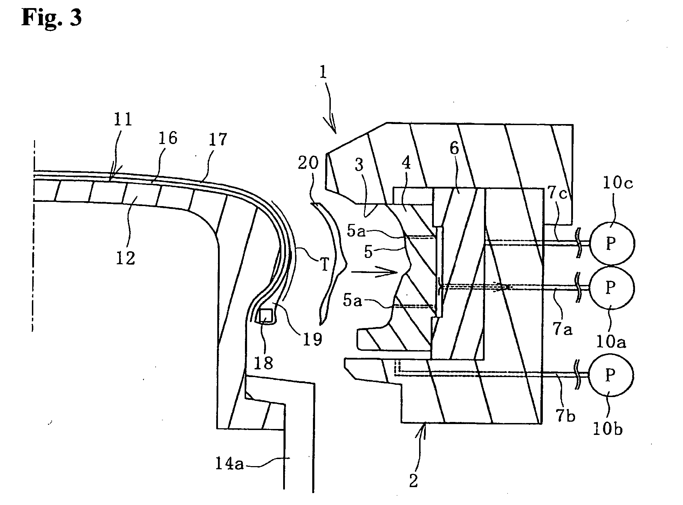

An inner liner 16 and a carcass member 17 are layered successively on the external circumferential surface of the rigid inner mold 11 as shown in Fig. 3. Carcass material 17 is draped between a pair of bead rings 18 and folded around the bead rings 18 from inside to outside so as to sandwich a bead filler 19.

This rigid inner mold 11 has a circular cylindrical shape and comprises a plurality of divided bodies 12 that are divided along a circumferential direction. The material used for the rigid inner mold 11 is, for example, aluminum, an aluminum alloy, or another metal material. The exterior circumferential surface of the rigid inner mold 11 has substantially the same shape as an internal circumferential surface of a tire to be manufactured (tire that will result after vulcanization is completed). The divided bodies 12 are arranged in a circular cylindrical shape and fixed to circumferential edge portions of circular disk-like support plates 14a arranged facing across from each other.

A center shaft 13 is fixed to the support plates 14a such that it passes through circular center positions of the support plates 14a. The center shaft 13 is fixed to the pair of support plates 14a through support ribs 14b that are fixed to an external circumferential surface of the center shaft 13. In this way, the divided bodies 12 are attached to complete the rigid inner mold 11 such that it can be disassembled. Both ends of the center shaft 13 are rotatably supported in holding shafts 15. As a result, the rigid inner mold 11 can rotate about the center shaft 13.

The molding apparatus 1 comprises a pair of annular holders 2 arranged on both sides of the rigid inner mold 1. Each of the annular holders 2 is supported on a holder support section 8 such that it can move along a guide rail 9. By moving along the rails 9, the annular holders 2 move in directions of approaching toward and separating away from the side faces of the rigid inner mold 11 (i.e., an area T corresponding to a tire side section of the tire component member arranged on the external circumferential surface of the rigid inner mold 11).

Each of the annular holders 2 has an annular recess 3 in the side face thereof that faces toward the rigid inner mold 11. The recess 3 is configured and arranged such that it can cover the area T corresponding to the tire side section when it is moved toward the side face of the rigid inner mold 11. An air flow passage 7b is provided such that it communicates with the recess 3. The air flow passage 7b is connected to a pump 10b and functions as a suction line.

A holding part 4 and a sliding part 6 are arranged inside the recess 3. The sliding part 6 is arranged abutting against a back face of the holding part 4. The holding part 4 and the sliding part 6 are provided such that they can slide in directions of approaching toward and separating from a side face of the rigid inner mold 11.

The holding part 4 holds a side member 20 that is a component member of the tire. The holding part 4 has a holding surface 5 that has the same shape as a surface of the side member 20. The holding surface 5 is placed on the surface of the side member 20 and the annular side member 20 is held by the holding part 4. It is acceptable for the side member 20 to be provided as a unit with a chafer and other components.

In this embodiment, suction holes 5a are opened in the holding surface 5 and the suction holes 5a communicate with an air passage 7a that passes through the siding section 6. The air flow passage 7a is connected to a pump 10a and functions as a suction line.

An air passage 7c communicates with a back side of the sliding part 6. This air flow passage 7c is connected to a pump 10c. When air is pumped through the air flow passage 7c by driving the pump 10c, the sliding part 6 is pushed by a pneumatic pressure. As a result, the sliding part 6 and the holding part 4 move (advance) in a direction of approaching the side face of the rigid inner mold 11. When air is sucked through the air flow passage 7c by driving the pump 10c, the sliding part 6 is pulled by a pneumatic pressure. As a result, the sliding part 6 and the holding part 4 move (retract) in a direction of separating from the side face of the rigid inner mold 11.

Thus, the sliding part 6, the air flow passage 7c, and the pump 10c constitute a sliding mechanism that uses pneumatic pressure to slide the holding part 4 within the recess 3 in directions of approaching toward and separating from the area T corresponding to the tire side section.

While it is acceptable for the holding part 4 and the sliding part 6 to be a one-piece integral unit, in this embodiment they are provided as separate and independent parts. Side members 20 having differently shaped surfaces are used when green tires G having differently shaped sides are molded. By providing the holding part 4 and the sliding part 6 as separate parts, only the holding part 4 needs to be changed in order to mold a green tire having a differently shaped side.

A method of manufacturing a pneumatic tire using the molding apparatus 1 will now be explained.

As shown in Fig. 3, when the pump 10a is driven, air is sucked through the air flow passage 7a and the suction holes 5a (a vacuum is pulled). As a result, the surface of the side member 20 is sucked to the holding surface 5 such that the side member 20 is held by the holding part 4. This suction holding of the side member 20 is continued until the attachment of the side member 20 is completed. At this stage, the holding part 4 and the sliding part 6 are in a retracted position inside the recess 3. An inner liner 16, a carcass member 17, and other tire component members are arranged on the external circumferential surface of the rigid inner mold 11.

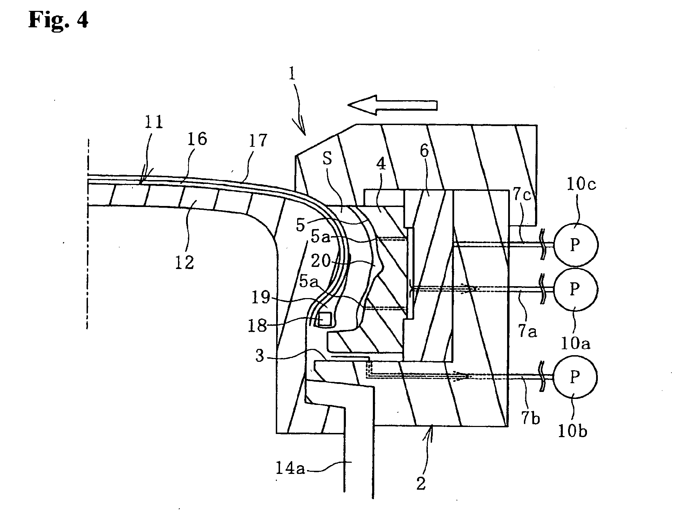

Next, as shown in Fig. 4, the annular holder 2 is moved into close proximity of the side face of the rigid inner mold 11 such that an inwardly-facing outer circumferential portion of the annular holder 2 contacts the carcass material 17 and an inwardly-facing inner circumferential portion of the annular holder 2 contacts the support plate 14a. As a result, the annular recess 3 is arranged side-by-side with and covers the area T corresponding to the tire side section of the tire component members arranged on the external surface of the rigid inner mold 11.

Next, the pump 10b is driven such that air is sucked from a space S between the recess 3 and the tire component member (carcass material 17) through the air flow passage 7b and the pressure is reduced (a vacuum is pulled) in the space S. For example, the space S is reduced to a pressure of 5 to 50 Pa (absolute).

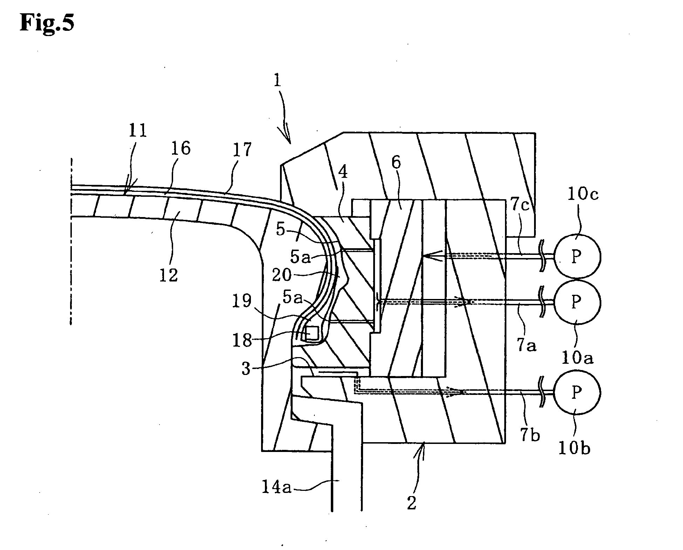

Next, as shown in Fig. 5, the pump 10c is driven while maintaining the pressure-reduced state of the space S such that air is pumped through the air flow passage 7c and the slide section 6 is slid toward the area T corresponding to the tire side section with pneumatic pressure. As a result, the side member 20 held by the holding part 4 is pressed against and attached to the area T corresponding to the tire side section.

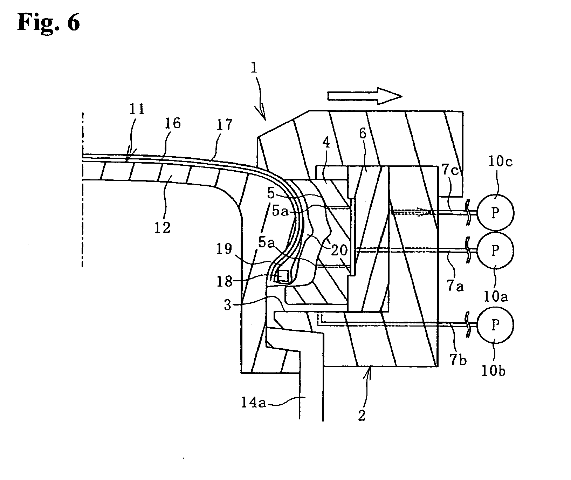

Next, as shown in Fig. 6, the pump 10c is driven such that air is sucked (a vacuum is pulled) through the air flow passage 7c and the slide section 6 and the holding part 4 are retracted. Then, the annular holder 2 is retracted such that it separates from the side face of the rigid inner mold 11.

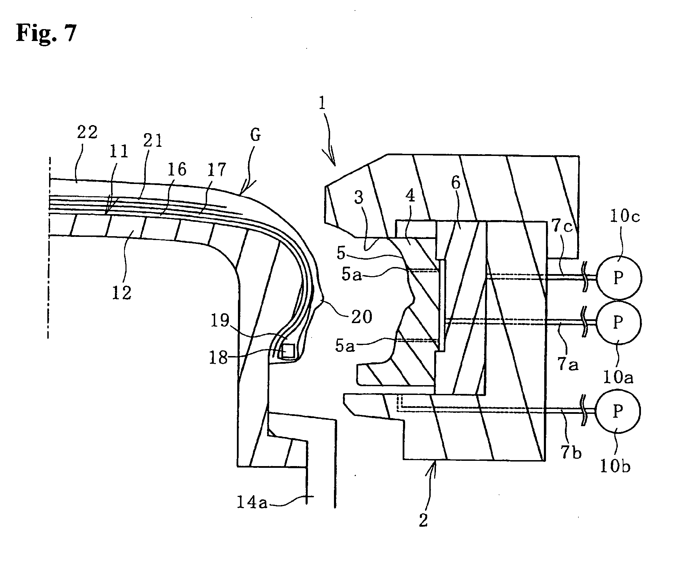

Next, as shown in Fig. 7, the remaining tire component members (belt layer 21 and tread member 22) are attached to the tire component members arranged on the external circumferential surface of the rigid inner mold 11 to complete the green tire G.

The completed green tire G is placed together with the rigid inner mold 11 into a mold provided in a vulcanizing apparatus and vulcanized. Or, the rigid inner mold 11 is disassembled and removed from the green tire G and only the green tire G placed into a mold and vulcanized.

With the present invention, since the tire component members are covered with the recess 3 and the space S is pulled to a reduced air pressure when the side member 20 is attached to the area T corresponding to the tire side section, it is not necessary to use a strong pressing force in order to prevent air from being trapped during the attachment. Additionally, since the surface of the side member 20 is held with a holding surface 5 having the same shape as the surface of the side member 20, the invention is advantageous from the standpoint of attaching the side member 20 with intimate contact while preventing the preset surface shape from being deformed -- even if the side member 20 is made of un-vulcanized rubber that is easily deformed.

Although it is possible to simply hold the side member 20 with the holding part 4 without using suction holding, the side member 20 can be held more reliably without deforming its surface shape by holding it with suction as is done in the embodiment.

Also, by sliding the holding part 4 with pneumatic pressure such that it slides toward the area T corresponding to the tire side section and presses against the side member 20, the side member 20 can be attached with intimate contact more reliably without applying excessive pressure against the side member 20.

A butyl rubber or a film can be used as the inner liner 16. If a film is used, then it is made of a thermoplastic resin or a thermoplastic resin blended with an elastomer to obtain a thermoplastic elastomer composition. The thickness is, for example, approximately 0.2 to 2.5 mm in the case of a butyl rubber and 0.005 to 0.2 mm in the case of a film. Consequently, using a film as the inner liner 16 contributes greatly to making the tire lighter in weight while also providing excellent air permeation prevention performance.

### REFERENCE SIGNS LIST

- 1: molding apparatus
- 2: annular holder
- 3: annular recess
- 4: holding part
- 5: holding surface
- 5a: section hole
- 6: slide section
- 7a, 7b, 7c: air flow passage
- 8: holder support section
- 9: guide rail
- 10a, 10b, 10c: pump
- 11: rigid inner mold
- 12: divided body
- 13: center shaft
- 14a: support plate
- 14b: support rib
- 15: holding shaft
- 16: inner liner
- 17: carcass material
- 18: bead ring
- 19: bead filler
- 20: side member
- 21: belt layer
- 22: tread member
- G: green tire
- S: space
- T: area corresponding to tire side section

## Claims

1. A pneumatic tire molding method for molding a green tire on an external circumference of a circular-cylindrically shaped rigid inner mold (11) whose external circumferential surface has substantially the same shape as a profile of an internal circumferential surface of a tire to be manufactured, comprising:
arranging an annular recess (3) formed in an annular holder (2) to be side-by-side with an area (T) corresponding to a tire side section of a tire component member (17) that is arranged on the external circumferential surface of the rigid inner mold (11) so as to cover said area; and
molding a green tire by attaching remaining tire component members to the tire component
member (17) arranged on the external circumferential surface of the rigid inner mold (11), the method being **characterised by** the steps of: sucking air from a space between the recess (3) and the tire component
member (17) covered by the recess (3) so as to reduce a pressure of the space, holding a surface of a side member (20) with a holding part (4) having a holding surface (5) that has the same shape as the surface of the side member (20), and pressing the side member (20) against and attaching the side member (20) to the area (T) corresponding to the tire side section under the pressure-reduced state.

2. The pneumatic tire molding method according to claim 1, wherein
when the side member (20) is held by the holding part (4), the side member (20) is adhered to the holding surface (5) with suction by sucking air through a suction hole (5a) opened in the holding surface (5).

3. The pneumatic tire molding method according to claim 1 or 2, wherein
within the recess (3), the holding part (4) is slid toward the area (T) corresponding to the tire side section using pneumatic pressure such that the side member (20) is pressed against the area (T) corresponding to the tire side section.

4. A pneumatic tire molding apparatus for molding a green tire on an external circumference of a circular-cylindrically shaped rigid inner mold (11) whose external circumferential surface has substantially the same shape as a profile of an internal circumferential surface of a tire to be manufactured, comprising:
an annular holder (2) configured to move in directions of approaching toward and separating from an area (T) corresponding to a tire side section of a tire component member (17) arranged on the external circumferential surface of the rigid inner mold, and having an annular recess (3) that can cover said area (T) corresponding to the tire side section;
a pump (10b) connected to the recess (3) through a suction line (7b) that communicates with the recess (3); and
a holding part (4) that is arranged inside the recess (3), has a holding surface shaped the same as a surface of the side member (20), and is configured to hold the surface of the side member (20) with the holding surface,
**characterized in that** the pump (10b) is further configured to suck air from a space between the recess (3) and the tire component member (17) covered by the recess (3) and so as to reduce a pressure of the space and to press the side member (20) against and attaching the side member (20) to the area (T) corresponding to the tire side section under the pressure-reduced state.

5. The pneumatic tire molding apparatus according to claim 4, further comprising:
a suction hole (7a)opened in the holding surface and a pump (10a) configured to suck air through the suction hole.

6. The pneumatic tire molding apparatus according to claim 4 or 5, further comprising:
a sliding mechanism configured to use pneumatic pressure to slide the holding part (4) within the recess (3) in directions of approaching toward and separating from the area (T) corresponding to the tire side section.

## Patentansprüche

1. Luftreifenformverfahren zum Formen eines Reifenrohlings auf einem Außenumfang einer kreiszylindrisch geformten starren Innenform (11), deren Außenumfangsfläche im wesentlichen dieselbe Form wie ein Profil einer Innenumfangsfläche eines herzustellenden Reifens aufweist, umfassend:
Anordnen einer ringförmigen Versenkung (3), die in einem ringförmigen Halter (2) ausgebildet ist, so dass sie neben einem Bereich (T) angeordnet ist, der einem Reifenseitenabschnitt eines Reifenkomponentenelements (17) entspricht, das auf der Außenumfangsfläche der starren Innenform (11) angeordnet ist, um den Bereich abzudecken;
und
Formen eines Reifenrohlings durch Anbringen restlicher Reifenkomponentenelemente am Reifenkomponentenelement (17),
das auf der Außenumfangsfläche der starren Innenform (11) angeordnet ist, wobei das Verfahren durch die Schritte gekennzeichnet ist:
Absaugen von Luft aus einem Raum zwischen der Versenkung (3) und dem Reifenkomponentenelement (17), das durch die Versenkung (3) bedeckt ist, um den Druck des Raums zu reduzieren, Halten einer Oberfläche eines Seitenelements (20) mit einem Halteteil (4), das eine Haltefläche (5) aufweist, die dieselbe Form wie die Oberfläche des Seitenelements (20) aufweist, und Pressen des Seitenelements (20) gegen und Anbringen des Seitenelements (20) an den Bereich (T), der dem Reifenseitenabschnitt entspricht, unter dem druckreduzierten Zustand.

2. Luftreifenformverfahren nach Anspruch 1, wobei wenn das Seitenelement (20) durch das Halteteil (4) gehalten wird, das Seitenelement (20) mit Ansaugen an die Haltefläche (5) durch Absaugen von Luft durch ein Saugloch (5a) geheftet wird, das in die Haltefläche (5) mündet.

3. Luftreifenformverfahren nach Anspruch 1 oder 2, wobei in der Versenkung (3) das Halteteil (4) zu dem Bereich (T), der dem Reifenseitenabschnitt entspricht, mittels pneumatischen Drucks verschoben wird, so dass das Seitenelement (20) gegen den Bereich (T) gepresst wird, der dem Reifenseitenabschnitt entspricht.

4. Luftreifenformvorrichtung zur Formung eines Reifenrohlings auf einem Außenumfang einer kreiszylindrisch geformten starren Innenform (11), deren Außenumfangsfläche im wesentlichen dieselbe Form wie ein Profil einer Innenumfangsfläche eines herzustellenden Reifens aufweist, mit:
einem ringförmigen Halter (2), der konfiguriert ist, sich in die Richtung einer Annäherung an und einer Trennung von einem Bereich (T) zu bewegen, der einem
Reifenseitenabschnitt eines Reifenkomponentenelements (17) entspricht, das auf der Außenumfangsfläche der starren Innenform angeordnet ist, und der eine ringförmige Versenkung (3) aufweist, die den Bereich (T) abdecken kann,
der dem Reifenseitenabschnitt entspricht;
einer Pumpe (10b), die mit der Versenkung (3) durch eine Saugleitung (7b) verbunden ist, die mit der Versenkung (3) in Verbindung steht; und
einem Halteteil (4), das innerhalb der Versenkung (3) angeordnet ist, eine Haltefläche aufweist, die auf dieselbe Weise geformt ist wie eine Oberfläche des Seitenelements (20), und konfiguriert ist, die Oberfläche des Seitenelements (20) mit der Haltefläche zu halten,
**dadurch gekennzeichnet, dass** die Pumpe (10b) ferner konfiguriert ist, Luft aus einem Raum zwischen der Versenkung (3) und der Reifenkomponentenelemente (17) abzusaugen, die durch Versenkung (3) bedeckt ist, um den Druck des Raums zu reduzieren und das Seitenelement (20) gegen und das Seitenelement (20) an den Bereich (T) unter dem druckreduzierten Zustand zu pressen und anzubringen,
der dem Reifenseitenabschnitt entspricht.

5. Luftreifenformvorrichtung nach Anspruch 4, die ferner aufweist:
ein Saugloch (7a), das in der Haltefläche mündet, und eine Pumpe (10a), die konfiguriert ist, Luft durch das Saugloch abzusaugen.

6. Luftreifenformvorrichtung nach Anspruch 4 oder 5, die ferner aufweist:
einen Verschiebungsmechanismus, der konfiguriert ist, einen pneumatischen Druck zu verwenden, um das Halteteil (4) innerhalb der Versenkung (3) in die Richtung einer Annäherung an und einer Trennung von dem Bereich (T) zu verschieben, der dem Reifenseitenabschnitt entspricht.

## Revendications

1. Procédé de moulage d'un bandage pneumatique, pour le moulage d'un pneu cru sur une circonférence extérieure d'un moule intérieur rigide (11) de forme circulaire-cylindrique dont la surface circonférentielle extérieure a sensiblement la même forme qu'un profil d'une surface circonférentielle intérieure d'un pneu à fabriquer, comprenant :
disposition d'une cavité annulaire (3) formée dans un support annulaire (2) de manière à accoler celle-ci contre un arc (T) correspondant à une section latérale d'un composant de pneu (17) prévu sur la surface circonférentielle extérieure du moule intérieur rigide (11) de manière à recouvrir cette zone ; et
moulage d'un pneu cru par fixation des composants de pneu restants au composant de pneu (17) disposé sur la surface circonférentielle extérieure du moule intérieur rigide (11), ledit procédé étant **caractérisé par** les étapes suivantes :
aspiration de l'air dans un espace entre la cavité (3) et
le composant de pneu (17) recouvert par la cavité (3) de manière à réduire une pression dans l'espace, maintien d'une surface d'un élément latéral (20) par une partie de support (4) avec une surface de support (5) de forme identique à la surface de l'élément latéral (20), et
serrage de l'élément latéral (20) contre, et fixation de l'élément latéral (20) sur la zone (T) correspondant à la section latérale de pneu en état de pression réduite.

2. Procédé de moulage d'un bandage pneumatique selon la revendication 1, où
quand l'élément latéral (20) est maintenu par la partie de support (4), l'élément latéral (20) adhère par succion à la surface de support (5), l'air étant aspiré par un orifice d'aspiration (5a) ménagé dans la surface de support (5).

3. Procédé de moulage d'un bandage pneumatique selon la revendication 1 ou 2, où
à l'intérieur de la cavité (3), la partie de support (4) est glissée vers la zone (T) correspondant à la section latérale de pneu au moyen d'une pression pneumatique, de manière à serrer l'élément latéral (20) contre la zone (T) correspondant à la section latérale de pneu.

4. Dispositif de moulage d'un bandage pneumatique, pour le moulage d'un pneu cru sur une circonférence extérieure d'un moule intérieur rigide (11) de forme circulaire-cylindrique dont la surface circonférentielle extérieure a sensiblement la même forme qu'un profil d'une surface circonférentielle intérieure d'un pneu à fabriquer, comprenant :
un support annulaire (2) prévu pour être mobile dans les directions de rapprochement et d'éloignement par rapport à une zone (T) correspondant à une section latérale d'un composant de pneu (17) prévu sur la surface circonférentielle extérieure du moule intérieur rigide, et
avec une cavité annulaire (3) pouvant recouvrir ladite zone (T) correspondant à la section latérale de pneu ;
une pompe (10b) reliée à la cavité (3) par un conduit d'aspiration (7b) communiquant avec la cavité (3) ; et
une partie de support (4) prévue à l'intérieur de la cavité (3) avec une surface de support de forme identique à une surface de l'élément latéral (20), et prévue pour maintenir la surface de l'élément latéral (20) par la surface de support,
**caractérisé en ce que** la pompe (10b) est en outre prévue pour aspirer l'air dans un espace entre la cavité (3) et le composant de pneu (17) recouvert par la cavité (3) de manière à réduire ainsi une pression dans l'espace et à serrer l'élément latéral (20) contre, et à fixer l'élément latéral (20) sur la zone (T) correspondant à la section latérale de pneu en état de pression réduite.

5. Dispositif de moulage d'un bandage pneumatique selon la revendication 4, comprenant en outre : un orifice d'aspiration (7a) ménagé dans la surface de support et une pompe (10a) prévue pour aspirer l'air par l'orifice d'aspiration.

6. Dispositif de moulage d'un bandage pneumatique selon la revendication 4 ou la revendication 5, comprenant en outre un mécanisme de glissement recourant à une pression pneumatique, pour faire glisser la partie de support (4) à l'intérieur de la cavité (3) dans les directions de rapprochement et d'éloignement par rapport à la zone (T) correspondant à la section latérale du pneu.
